# EUROPEAN PATENT APPLICATION

(11) **EP 1 295 898 A1**
(43) Date of publication of application: **26.03.2003**
(21) Application number: 01122907.7
(22) Date of filing: 25.09.2001
(51) Int. Cl.: C08F 8/14, C08G 81/00

(54) **Process for preparing polymer additives and polyolefin compositions with improved paint adhesion**

(71) Applicant: Basell Polyolefine GmbH, 50389 Wesseling (DE)
(72) Inventor: Couvreur, Raphaelle, 75011 Paris (FR); Michel, Alain, 69004 Lyon (FR); Vaillant, Daniel, 76330 Saint Maurice d'Etelan (FR); Bormann, Patrick, 76490 Caudebec en Caux (FR)

(57) **Abstract**

A process for preparing polyolefin additives containing hydroxy groups by reactive coextrusion of a polymer A containing dicarboxylic anhydride groups with at least one organic compound B having at least two hydroxy groups and a process for preparing a modified polyolefin composition containing hydroxy groups comprising the mixing of a polyolefin C with such polyolefin additives.

## Description

The present invention relates to a process for preparing polymer additives containing hydroxy groups. It also relates to a process for preparing a modified polyolefin compositions containing hydroxy groups with improved paint adhesion.

The use of polyolefins, specially of polypropylene, has developed widely in a large number of applications. In particular polypropylene based compositions are increasingly used for the construction of many interior and exterior automotive parts like bumpers, lateral strips, rear view mirrors or cowling grills. For most of these applications the automotive parts have to be painted in order to provide them with a colour finish for a better appearance and for their protection against negative physical or chemical attacks.

Polyolefins in general and polypropylene in particular exhibit a non-polar nature whereas most paints are polar. Therefore the paint does not adhere well on the non-polar surface of parts made of polyolefins or in particular of polypropylene.

A pre-treatment of the non-polar surface is often used to improve the paint adhesion. These treatments can involve physicochemical treatments like flame treatment, corona treatment, UV radiation or chemical treatments like etching with chlorine or the use of a primer based on chlorinated polyolefins. In Europe the polyolefin surfaces of many automotive parts are normally treated by a physical method, such as flame treatment, followed by the application of an adhesion primer, before the paint base is applied.

In order to reduce the cost of the above mentioned process and limiting the negative effects on the environment caused by the use of chlorinated polyolefins, the automobile industry is looking for polyolefin compositions exhibiting the same good paint adhesion on their surface but without the need of special processing steps of physical treatment and/or of coating the surface with a primer.

Recently polypropylene compositions have been described which have an improved paint adhesion and which consist of a mixture of polypropylene and an additive which is a polypropylene grafted with maleic anhydride (PP-g-MA) and modified with mono- or difunctional polyethers. The European patent application EP 0 662 496 describes a method for preparing PP-g-MA / mono- or difunctional polyether additives by mixing a PP-g-MA with difunctional polyethers in an internal mixer like a stirred vessel. This method is a time consuming procedure and most polyolefin processors do not have the necessary equipment like stirred vessels.

The European patent application EP188926 describes a mixture of polypropylene / PP-g-MA /polyols which has an improved adhesion on aluminium. It is recommended to mix all components in a single operation. The application of this procedure to polypropylene based blends did not give the desired degree of paint adhesion.

Thus there is still the need to find a simple and economically optimised method to produce polyolefin additives to be used as components for polyolefin compositions with improved paint adhesion.

It is an object of the present invention to remedy the disadvantages described above and to provide an economic and efficient process for preparing polyolefin additives containing hydroxy groups.

Another object of the present invention is to provide a process for preparing modified polyolefin compositions containing hydroxy groups with improved paint adhesion while maintaining their desired mechanical and rheological properties.

Accordingly, a process for preparing polyolefin additives containing hydroxy groups characterised by reactive coextrusion of a polymer A containing dicarboxylic anhydride groups with at least one organic compound B having at least two hydroxy groups has been found.

Furthermore, a process for preparing a modified polyolefin composition containing hydroxy groups comprising the mixing of a polyolefin C with the extruder product obtained by the inventive process for preparing polyolefin additives has been found.

Polymer A can be any polymer that contains dicarboxylic anhydride groups. The dicarboxylic anhydride groups can be introduced to polymer A by polymerisation or copolymerisation of the appropriate monomers containing at least one monomer with at least one dicarboxylic anhydride group, or the dicarboxylic anhydride groups can be introduced by radical grafting of a polymer with a monomer containing a dicarboxylic anhydride group and a carbon-carbon double bond. Such radical grafting reactions are e.g. described in the US-Patent No. 5,451,639.

Examples of monomers containing a dicarboxylic anhydride group useful for polymerisation, copolymerisation or grafting are maleic anhydride, *endo*-bicyclo[2.2.2]oct-5-ene-2,3-dicarboxylic anhydride or cis-5-Norbornene-endo-2,3-dicarboxylic anhydride.

Preferably the process for preparing polyolefin additives containing hydroxy groups is characterised in that polymer A is a polyolefin grafted with maleic anhydride.

Examples for such polyolefins to be grafted with maleic anhydride are ethylene homo- or copolymers with C₃-C₈-α-olefins, propylene homo- or copolymers with C₂-C₈-α-olefins, 1-butylene homo- or copolymers with C₂-C₈-α-olefins, hydrogenated polybutadienes, polyisoprene, hydrogenated polyisoprene, ethylene-propylene-diene-rubbers and cycloolefin copolymers like norbornene-ethylene copolymers.

In particular polymer A is a propylene homo- or copolymer grafted with maleic anhydride. These polymers are commercially available. Examples of commercially available grades of polypropylene grafted with maleic anhydride are Questron KA 805 from Basell, Epolene G 3003 from Eastmann or Polybond 3200 from Uniroyal.

The grafting process of polypropylene with maleic anhydride in the presence of a radical initiator is well known in the literature and is established in industry. Therefore polymer A can also be produced in an extra step just before starting the inventive process.

The organic compound B which has at least 2 hydroxy groups, can e.g. be a polyol, preferably a diol. According to the present invention a part of the hydroxy groups of the organic compound B has to react with the dicarboxylic anhydride groups of polymer A under the conditions of an extrusion process. This process is called reactive coextrusion. Preferably the reactive hydroxy groups are aliphatic primary alcohol groups represented by the fragment-CH₂-OH or secondary alcohol groups represented by the fragment =CH-OH.

None limiting examples of the organic compound B are alkanediols, alkanetriols, polyvinylalcohols, poly-(vinylalcohol-co-ethylene), polyethylene glycols or polypropylene glycols.

Preferably the process for preparing the inventive polyolefin additives is characterised in that the organic compound B is a α,ω-alkanediol with 3-12 carbon atoms. None limiting examples of such diols are 1,3-propanediol, 1,4-butanediol, 1,6-hexanediol or 1,8-otanediol.

In particular the organic compound B is 1,4-butanediol.

Also preferably the organic compound B is polyethylene glycol or poly-(vinylalcohol-co-ethylene).

Polymer A and the organic compound B are reacted together in such amounts that the ratio of the total number of dicarboxylic anhydride groups of polymer A and the total number of hydroxy groups of the organic compound B are in the range of 1 : 0,1 to 1 : 20, preferably from 1 : 0.5 to 1 : 10. In the case of diols is the molecular ratio of the dicarboxylic anhydride groups to the diol molecules in the range of 1 : 0,05 to 1 : 10, preferably 1 : 0,25 to 1 : 6 and in particular 1 : 0,75 to 1 : 4.

The reaction between the dicarboxylic anhydride groups and the hydroxy groups is done in an extruder. Polymer A and the organic compound B can be premixed and then they can be introduced together into the entry point of the extruder. Another possibility is the introduction of polymer A at the entry point of the extruder and the addition of the organic compound B further down the extruder. The organic compound B can be advantageously dosed by a pump.

The temperature inside the extruder, i.e. the reaction temperature, is usually between 160°C and 300°C, preferably between 180°C and 270°C.

The average retention time of the reaction mixture in the extruder which is comparable with an average reaction time is in the range of 0.5 to 5 minutes, preferably between 1 and 3 minutes, most preferably between 1.5 and 2.5 minutes.

The reaction of the dicarboxylic anhydride function and the hydroxy function can be improved by the addition of at least one suitable catalyst such as dibutyl tin dilaurate or tetrabutyl titanate to the reaction mixture. Such catalysts are usually added in an amount of 0.001 mol% to 20 mol% based on the dicarboxylic anhydride groups.

The extruder in which the process for preparing the polyolefin additives containing hydroxy groups is performed can be any single- or two-stage machine. The extruder should accept solid or liquid molding compositions and extrude the same, predominantly continuously, through an orifice. Examples of extruders to be applied in the inventive process are diskpack plasticators, pin-type extruders and planetary extruders. Machinery of this type is conventional in the plastics industry.

Preferred extruders are screw extruders, and these may be constructed as single- or twin-screw machines.

Particular preference is given to twin-screw extruders.

According to the instant invention a process for preparing a modified polyolefin composition containing hydroxy groups comprising the mixing of a polyolefin C with the extruder product obtained by the inventive process for preparing polyolefin additives has been found.

The amount of the polyolefin additives in the final polyolefin composition containing hydroxy groups is between 0.1% to 40% by weight, preferably between 1% and 25% by weight, in particular between 5% and 20%.

Polyolefin C is a component essentially unreactive under the mixing conditions. The term polyolefin includes homopolymers and copolymers. Polyolefin C represents the matrix of the final polyolefin composition.

Polyolefin C can be ethylene homo- or copolymers with C₃-C₈-α-olefins, propylene homo- or copolymers with C₂-C₈-α-olefins, 1-butylene homo- or copolymers with C₂-C₈-α-olefins, hydrogenated polybutadienes, polyisoprene, hydrogenated polyisoprene, ethylene-propylene-diene-rubbers and cycloolefin copolymers like norbornene-ethylene copolymers.

Preferably polyolefin C is a propylene homo- or copolymer.

In particular polyolefin C is a propylene-ethylene copolymer containing up to 50% by weight of ethylene.

In particular a process for preparing a modified polyolefin composition containing hydroxy groups is preferred characterised in that polyolefin C contains at least a further polyolefin additive selected from the group of stabilisers, processing reagents, pigments, fillers or nucleating reagents, or that at least one further polyolefin additive is added during the process.

The particular kind and amounts of additives depend on the particular application of the final polymer composition and are known to a person skilled in this technical field.

Customary stabilizers are antioxidants such as sterically hindered phenols, processing stabilizers such as phosphites or phosphonites, acid traps such as calcium stearate, zinc stearate or dihydrotalcite, sterically hindered amines or else UV stabilizers. Generally the propylene polymer composition of the invention includes one or more of the stabilizers in amounts of up to 2% by weight based on the total mass of the polymer composition.

Useful processing reagents are lubricants and demolding agents such as fatty acids, calcium or zinc salts of fatty acids, fatty amides or low molecular weight polyolefin waxes, which are customarily used in concentrations of up to 2 % by weight.

Useful pigments or fillers for the modified polyolefin composition include for example talc, chalk or glass fibers in amounts of up to 50% by weight.

Useful nucleating agents include for example inorganic additives such as talc, silica or kaolin, salts of mono- or polycarboxylic acids such as sodium benzoate or aluminium tert.-butylbenzoate, dibenzylidene sorbitol or its C₁-C₈-alkyl-substituted derivatives such as methyl- or dimethyldibenzylidene sorbitol or salts of diesters of phosphoric acid such as sodium 2,2'-methylenebis-(4,6-di-tert.-butylphenyl)phosphate. In case that nucleating agents are applied, the nucleating agent content of the propylene polymer composition is generally in the range between 0.001% and 5% by weight.

Additives of these types are generally commercially available and are described for example in Gächter/Müller, Plastics Additives Handbook, 4^{th} Edition, Hansa Publishers, Munich, 1993.

The conditions for preparing a modified polyolefin composition by mixing at least the extruder product obtained from polymer A and at least an organic compound B with polyolefin C are not critical. The preparation can be done in any single or two stage machine. The used machines can be extruders like a diskpack plasticators, pin-type extruders and planetary extruders. Other possibilities are combinations of mixers with discharge screws and/or gear pumps.

Preferably the preparation of a modified polyolefin composition is done in an extruder under similar or the same processing conditions as described above for the preparation of the polyolefin additive containing hydroxy groups.

The temperature inside the extruder, i.e. the processing temperature, is usually between 160°C and 300°C, preferably between 180°C and 270°C.

The average retention time of the mixture in the extruder is in the range of 0.1 to 5 minutes, preferably between 0.25 and 1 minute.

The preparation of the polyolefin additives containing hydroxy groups is a very time saving process because the reaction time is in the order of a few minutes, in general less than 3 minutes. In addition this method is a much gentler process than the long lasting process in a stirred vessel. The obtained additive of the inventive process is a very homogeneous product that can be directly used in the next mixing step with the matrix polyolefin C. In most cases this step is done also in an extruder. So a polyolefin processor can produce the polyolefin additive containing hydroxy groups and the final polyolefin composition containing hydroxy groups in an appropriate extruder line without the need of other special equipment like stirred vessels. The modified polyolefin composition containing hydroxy groups obtained by the inventive process exhibits also better paint adhesion values compared with the method described in EP 188926 in which the matrix olefin C, the maleic anhydride grafted polymer A and the organic compound B are all together extruded in a single step.

The polyolefin composition of the present invention exhibits a better paint adhesion than the matrix polyolefin C alone.

The following examples are provided to illustrate the invention, although they are not restrictive in any way.

In these examples the paint adhesion is determined using a polyurethane base. The adhesion is tested according to the method given in the ISO 2409 Standard which consists in scratching the surface and trying to pull off the paint with an adhesive tape.

### Examples

### Paint adhesion test:

The paint adhesion was tested according to the ISO 2409 Standard using the crosshatch test and the disbondment on the grid pattern is evaluated using adhesive tape. The adhesion is rated in the following manner:

| | |
|---|---|
| Rating 0 | 0 % of the varnish disbonded |
| Rating 1 | up to 5 % of the varnish disbonded |
| Rating 2 | between 5 and 15 % of the varnish disbonded |
| Rating 3 | between 15 and 35 % of the varnish disbonded |
| Rating 4 | between 35 and 65 % of the varnish disbonded |
| Rating 5 | more than 65 % of the varnish disbonded |

### Example 1

Questron KA 805 A (a PP-g-MA obtained from Basell) was extruded with polyethylene glycol (average molecular weight: 200 g/mole) at a stoichiometric ratio of 1:1 (one mole of dicarboxylic anhydride to one mole of diol molecules) in a BC 21 extruder at 240 °C with a throughput of 3 kg/h. Then the resulting product was itself extruded, using the same conditions as in the first step, with the PP copolymer Novolen PPT 0016 (produced by Basell; this copolymer contains about 17% of ethylene as comonomer). Polyolefin composition with different ratios of the extruder reaction product to the matrix polypropylene (Novolen PPT 0016) were produced (compare table 1 and 2).

The resulting products were injected to form plates for the paint adhesion tests and to form dumbbell shaped pieces for measuring the mechanical properties.

The plates were cleaned with hexane or xylene before applying the paint. The used varnish was a mixture of Macrymal SM (an hydroxylated acrylic copolymer from the Vianova Company) and Tolonate HDB 75 MX (a biuret type of polyisocyanate from the Rhodia Company). This mixture was applied by spray in order to obtain a more or less regular thickness of 30 microns. Then the plates were placed in an oven for 30 minutes at 80 °C to dry the varnish.

The adhesion measurement was carried out on three plates, and an average was taken each time.

**Table 1**

| Mixture | % PP | % PP - g - MA/diol | Adhesion |
|---|---|---|---|
| 1 (Comp. Ex.) | 100 | 0 | 5 |
| 2 | 95 | 5 | 0 |
| 3 | 90 | 10 | 0.2 |
| 4 | 80 | 20 | 0 |

The melt flow indexes (MFI) and the Charpy impact resistances at 0 and -30 °C, according to the ISO 179 Standard, and the modulus in tension, according to the ISO 527 Standard, were measured on the following different mixtures:

**Table 2**

| Measurement | Units | Mixtures | | | |
|---|---|---|---|---|---|
| | | 1 | 2 | 3 | 4 |
| MFI at 230 °C under 2.16 kg | g/10 min | 10.7 | 11 | 12.5 | 13 |
| Notched Charpy impact at 0 °C | MJ/mm² | 12.9 | 12.9 | 12.1 | 13.3 |
| Pre-cut Charpy impact at -30 °C | MJ/mm² | 8.7 | 7.9 | 7.1 | 8.0 |
| Tensile Modulus | MPa | 1042 | 1026 | 1033 | 995 |

These results demonstrated that products prepared by the inventive concept could be painted without using an adhesion primer and/or physical pre-treatment, while maintaining the mechanical and rheological properties of the basic product.

### Comparative Example 1 mixture 4

The simultaneous coextrusion (in analogy to EP 188926) of the three starting materials of example 1- mixture 4 (Questron KA 805 A; polyethylene glycol (average molecular weight: 200 g/mole); Novolen PPT 0016 ) was carried out in a single stage. The paint adhesion test of this product (80 % PP; 20 % PP - g - MA/diol) resulted a rating of 3.

### Example 2

According to example 1 Novolen PPT 0016 was extruded with the extruder reaction product of Questron KA 805 A with butane diol which was introduced by a pump into the extruder. The stoichiometric ratio of the PP-g-MA to the diol was changed. The paint adhesion was tested on different compositions according to the above described method (table 3).

**Table 3**

| Mixture | % PP | % grafted PP | Stoichiometric ratio of the dicarboxylic anhydride groups of the grafted PP/ butane diol | Adhesion |
|---|---|---|---|---|
| 1 (comp. Ex.) | 100 | 0 | - | 5 |
| 2 | 95 | 5 | 1:2 | 4.3 |
| 3 | 95 | 5 | 1:4 | 2 |
| 4 | 90 | 10 | 1:2 | 1 |
| 5 | 90 | 10 | 1:4 | 0.3 |
| 6 | 80 | 20 | 1:2 | 1 |
| 7 | 80 | 20 | 1:4 | 0.3 |

### Example 3

According to example 2 the same operations were done except that butane diol was replaced by a polyethylene glycol of 150 g/mole (table 4).

**Table 4**

| Mixture | % PP | % grafted PP | Stoichiometric ratio of the dicarboxylic anhydride groups of the grafted PP / Polyethylene glycol (150 g/mole) | Adhesion |
|---|---|---|---|---|
| 1 (comp. Ex.) | 100 | 0 | - | 5 |
| 2 | 95 | 5 | 1:1 | 0.3 |
| 3 | 95 | 5 | 1:2 | 3 |
| 4 | 90 | 10 | 1:1 | 0.7 |
| 5 | 90 | 10 | 1:2 | 1 |
| 6 | 80 | 20 | 1:1 | 1 |
| 7 | 80 | 20 | 1:2 | 0 |

### Example 4

According to example 2 the same operations were done except that butane diol was replaced by Desmophen 1155 from Bayer which is a polyalcohol with ester and ether groups.

**Table 5**

| Mixture | % PP | % grafted PP | Stoichiometric ratio of the dicarboxylic anhydride groups of the grafted PP / 0.5 x Hydroxy groups of Desmophen 1155 | Adhesion |
|---|---|---|---|---|
| 1 (comp. Ex.) | 100 | 0 | - | 5 |
| 2 | 95 | 5 | 1:1 | 2.3 |
| 3 | 95 | 5 | 1:2 | 2 |
| 4 | 90 | 10 | 1:1 | 1.7 |
| 5 | 90 | 10 | 1:2 | 2 |
| 6 | 80 | 20 | 1:1 | 0 |

## Claims

1. A process for preparing polyolefin additives containing hydroxy groups **characterised by** reactive coextrusion of a polymer A containing dicarboxylic anhydride groups with at least one organic compound B having at least two hydroxy groups.

2. A process according to claim 1 **characterised in that** the polymer A is a polyolefin grafted with maleic anhydride.

3. A process according to claim 1 or 2 **characterised in that** the polymer A is a propylene homo- or copolymer grafted with maleic anhydride.

4. A process according to claims 1 to 3 **characterised in that** the organic compound B is a α,ω-alkanediol with 3-12 carbon atoms.

5. A process according to claims 1 to 4 **characterised in that** the organic compound B is 1,4-butanediol.

6. A process according to claims 1 to 3 **characterised in that** the organic compound B is polyethylene glycol.

7. A process according to claims 1 to 3 **characterised in that** the organic compound B is poly-(vinylalcohol-co-ethylene).

8. A process for preparing a modified polyolefin composition containing hydroxy groups comprising the mixing of a polyolefin C with the extruder product obtained by a process according to any of the preceding claims.

9. A process according to claim 8 **characterised in that** the polyolefin C is a propylene homo- or copolymer.

10. A process according to claim 8 or 9 **characterised in that** the polyolefin C contains at least a further polyolefin additive selected from the group of stabilisers, processing reagents, pigments, fillers or nucleating reagents, or that at least one further polyolefin additive is added during the process.
